# EUROPÄISCHE PATENTSCHRIFT

(11) **EP 1 709 856 B1**
(45) Veröffentlichungstag und Bekanntmachung des Hinweises auf die Patenterteilung: **17.02.2010**
(21) Anmeldenummer: 05007359.2
(22) Anmeldetag: 05.04.2005
(51) Int. Cl.: A01B 73/00, A01B 51/02

(54) **Selbstfahrende Bestellkombination mit mehreren, hintereinander angeordneten Zwischenachsen**
Automotive seeding combine with a plurality of trailing intermediate axles
Machine combinée automotrice de semis avec une pluralité d'arbres intermédiaires en ligne

(43) Veröffentlichungstag der Anmeldung: 11.10.2006
(73) Patentinhaber: Lemken GmbH & Co. KG, 46519 Alpen (DE)
(72) Erfinder: Siebers, Josef, 46509 Xanten (DE)
(74) Vertreter: Schulte, Jens Michael

(56) Entgegenhaltungen:
- EP-A- 0 900 515
- EP-A- 1 454 517
- US-A- 4 157 735
- US-A- 5 715 893

## Beschreibung

Die Erfindung betrifft eine selbstfahrende Bestellkombination mit mindestens einem Saattank, mindestens einer Triebachse, einem Rahmen , der sowohl mit der Vorderachse als auch einer Hinterachse verbunden ist, und mit mindestens zwei Walzeneinheiten und einer mittleren Walzeneinheit, die mittelbar oder unmittelbar mit einer Bodenbearbeitungseinheit verbunden sind und mit einer der Bodenbearbeitungseinheit nachgeordneten Säschiene mit Säscharen, wobei die nebeneinander angeordneten Walzeneinheiten einer Traverse zugeordnet sind, die in der Arbeitsstellung quer zur Fahrtrichtung positioniert und mit den Walzeneinheiten von der Querstellung in eine Längsstellung verbringbar ausgebildet ist.

Eine derartige selbstfahrende Bestellkombination ist der DE-OS 10 151 256 A1 zu entnehmen. Bei dieser selbstfahrenden Bestellkombination wird der Boden vor den Bodenbearbeitungseinheiten ganzflächig rückverfestigt, und zwar vom zweiachsigen Fahrwerk und von zusätzlich motorisch angetriebenen Walzeneinheiten, die seitlich entsprechend weit auskragend angeordnet sind. Diese selbstfahrende Bestellkombination weist zwei Achsen auf, die während der Transportfahrt vor allem auf der Straße das gesamte Gewicht der Bestellkombination tragen müssen. Die zulässigen Achslasten sind durch gesetzliche Auflagen begrenzt, sodass insgesamt eine derartige Bestellkombination mit großer Arbeitsbreite und mit vollem Saattank nicht in Ländern eingesetzt werden kann, die beispielsweise maximal zulässige Achslasten von 10 t oder 11,5 t vorschreiben. Auch die Bestellkombination gemäß der US-A-5 715 893 verfügt über Walzeneinheiten, die über Achsen in die Längsstellung verschwenkbar sind. In der Längsstellung stützen sie sich nur auf der Achse der mittleren Walzeneinheit ab, so dass sie auf der Straße nicht verfahren werden dürfen.

Der Erfindung liegt daher die Aufgabe zu Grunde, eine selbstfahrende Bestellkombination zu schaffen, bei der auch extreme Arbeitsbreiten von 6 m, 9 m und mehr Metern erreichbar sind und die Zuordnung von Bodenbearbeitungseinheiten möglich ist, ohne dass die zulässigen Achslasten überschritten werden.

Die Aufgabe wird gemäß der Erfindung dadurch gelöst, dass die Walzeneinheiten ihrerseits mit der Traverse schwenkbar verbunden und in der Längsstellung mit ihren Achsen zu Zwischenachsen werdend ausgebildet sind.

Durch diese Ausbildung ist es möglich, die in Arbeitsstellung quer angeordnete Traverse mit den nebeneinander angeordneten Walzeneinheiten und den Bearbeitungseinheiten für den Transport in eine Längsstellung und Transportstellung zu verschwenken. Da dabei gleichzeitig die Walzeneinheiten auch selbst um die Traverse verschwenkt werden, werden aus einer Achse mehrere hintereinander angeordnete Achsen, was dazu führt, dass die selbstfahrende Bestellkombination auch bei sehr hohem zusätzlichen Gesamtgewicht auf Straßen transportiert werden kann, ohne dass dabei die zulässigen Achslasten von z.B. 10 t oder 11,5 t überschritten werden.

Die Bodenbearbeitungseinheit bildet mit den Walzeneinheiten eine Einheit, wobei eine gleichmäßige Verschwenkung und dabei auch gleichzeitiger Gewichtsausgleich dadurch möglich ist, dass den Walzeneinheiten jeweils einer Bodenbearbeitungseinheit zugeordnet ist, von denen die den äußeren Walzeneinheiten zugeordneten Bodenbearbeitungseinheiten zusammen mit diesen verschwenkbar ausgebildet sind, während die der mittleren Walzeneinheit zugeordnete Bodenbearbeitungseinheit fest hinter der Hinterachse angeordnet ist.

Das Verschwenken der Traverse ist ohne weiteres möglich, weil sie um ein in ihrer Mitte ausgebildetes und sich auf der Walzeneinheit abstützendes Gelenk mit den zugeordneten Walzeneinheiten zusammen schwenkbar ist. Damit kann die Gesamtheit dieser Bauteile in einem Arbeitsgang um das Gelenk geschwenkt und in die neue Position gebracht werden.

Die Erfindung sieht weiter vor, dass mindestens zwei, vorzugsweise alle Walzeneinheiten angetrieben ausgebildet sind. Durch diese Ausbildungsform wird ein sicherer Antrieb der gesamten Bestellkombination sichergestellt und insbesondere in Hanglagen unnötiger Schlupf und damit Bodenschäden vermieden.

Weiter sieht die Erfindung vor, dass die Walzeneinheiten hydrostatisch, elektrisch oder mechanisch oder die mittlere mechanisch und die anderen hydrostatisch oder elektrisch antreibbar ausgebildet sind. Durch diese besondere Ausbildungsform der an der Traverse schwenkbar angeordneten Walzeneinheiten kann je nach Ausführung die günstigste Antriebsform genutzt werden. Dabei ist es denkbar, dass die mittig angeordnete Walzeneinheit mechanisch und die anderen, außen liegenden Walzeneinheiten hydrostatisch oder elektrisch angetrieben werden. Auch andere Variationen sind denkbar.

Für die Bodenbearbeitung besonders vorteilhaft ist es, wenn die Bodenbearbeitungseinheiten als Kreiseleggeneinheiten ausgebildet sind, die mechanisch oder hydrostatisch oder elektrisch antreibbar ausgeführt sind. Diese Kreiseleggeneinheiten eignen sich auch für schwierigste Böden, was mit nicht angetriebenen Bodenbearbeitungseinheiten nicht immer gewährleistet ist. Somit kann diese Bestellkombination praktisch in allen Bodenverhältnissen eingesetzt werden. Je nach Anforderung und zur Verfügung stehendem Freiraum kann z.B. die mittlere Kreiselegge mechanisch per Gelenkwelle und die äußeren Kreiseleggeneinheiten hydrostatisch oder elektrisch angetrieben werden.

Am hinteren Ende des Rahmens ist wie schon erwähnt eine Säschiene mit Säscharen angeordnet. Beim Transport würde diese quer zur Fahrtrichtung weit ausladend ausgebildete Säschiene unter Umständen den Straßenverkehr behindern. Um dies zu vermeiden ist vorgesehen, dass die Säschiene hochschwenkbar ausgebildet ist. Dadurch kommt sie aus dem wesentlichen Bereich heraus, wobei sie gedreht werden kann, um dann nicht mehr über die Seite des "Gesamtfahrzeuges" hinauszustehen. Besonders vorteilhaft ist es dabei, wenn die Säschiene über den Tragrahmen hochschwenkbar und einklappbar ausgebildet ist. Sie steht dann auch noch nicht einmal über den Tragrahmen und damit das hintere Ende des Rahmens vor.

Die Erfindung zeichnet sich insbesondere dadurch aus, dass eine selbstfahrende Bestellkombnation geschaffen ist, die sehr breit bauen kann mit 9 m und mehr, dennoch aber trotz des entsprechend hohen Gewichtes problemlos im Straßenverkehr sich bewegen kann, weil für die Abstützung dieses hohen Gewichtes mehr Achsen zur Verfügung gestellt werden. Dies erreicht man dadurch, dass die die Walzeneinheiten tragende Traverse um ein mittleres Gelenk zusammen mit den Walzeneinheiten schwenkbar ist, die ihrerseits so verschwenkt werden, dass die die einzelnen Räder tragenden Achsen zu Zwischenachsen werden, sodass bei optimaler Ausbildung eine zusätzlich zur Vorderachse dreiachsige Version zur Verfügung gestellt werden kann. Damit ist es möglich dieses Gerät auf Straßen zu transportieren, ohne dass dabei die zulässige Achslast von 10 t oder 11,5 t überschritten wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Draufsicht auf eine selbstfahrenden Bestellkombination in Ar- beitsstellung,
- Figur 2: eine Draufsicht der selbstfahrenden Bestellkombination in Transport- stellung und
- Figur 3: eine Seitenansicht der selbstfahrenden Bestellkombination in Trans- portstellung.

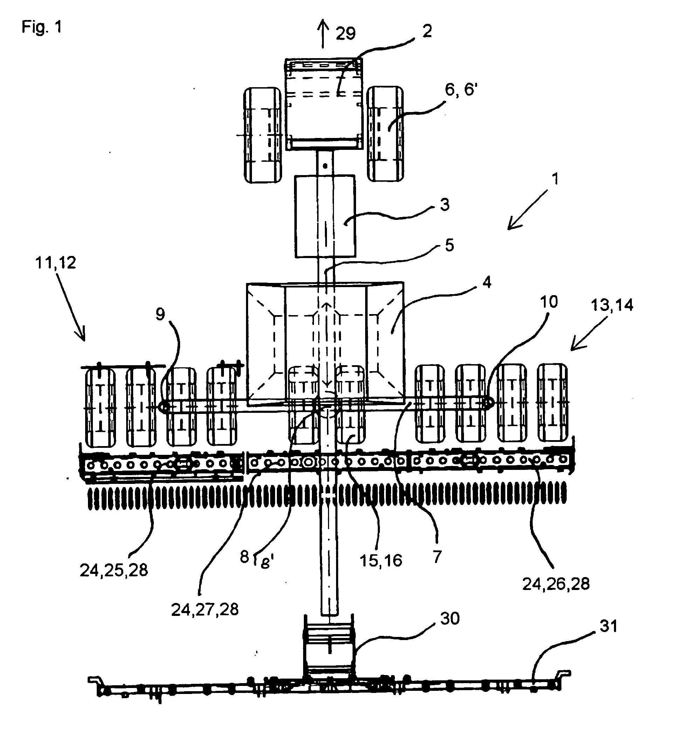

Figur 1 zeigt die Draufsicht der selbstfahrenden Bestellkombination (1) in Arbeitsstellung. Die selbstfahrende Bestellkombination (1) weist einen Rahmen (5) auf, der einteilig oder mehrteilig ausgebildet sein kann, eine Kabine (2), einen Motor (3), einen Saattank (4) und eine Vorderachse (6) trägt. Die Vorderachse (6) dient während der Arbeit gleichzeitig als Walze, wozu Räder (6') beidseitig der Kabine (2) vorgesehen sind. Die Räder (6') sind dementsprechend breit ausgebildet.

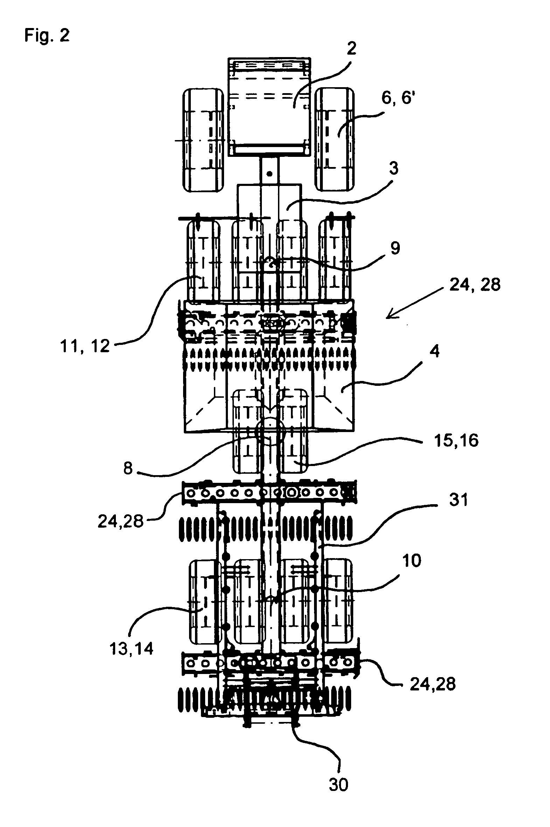

Am Rahmen (5) ist eine Traverse (7) angeordnet, die in der Mitte (8) um eine horizontale Achse bzw. ein abstützendes Gelenk (8') schwenkbar ausgebildet ist. Die Traverse (7) trägt an ihren Enden (9), (10) die Walzeneinheiten (11, 13). Die Walzeneinheit (11) wird in Transportstellung zu einer vorderen Zwischenachse (12), die Walzeneinheit (13) zu einer hinteren Zwischenachse (14). Dies ist insbesondere Figur 2 zu entnehmen. Die Walzeneinheiten (11, 13) sind am Ende (9, 10) der Traverse (7) schwenkbar ausgebildet, sodass sie die erwähnten Zwischenachsen (12, 14) bilden können.

Unterhalb der Traverse (7), und zwar in der Mitte (8) befindet sich die Hinterachse (16). Die Hinterachse (16) ist ebenfalls als Walzeneinheit (15) ausgebildet. Die einzelnen Walzeneinheiten (11, 13, 15) verfestigen den Boden zusammen mit der Vorderachse (6) bzw. den zugeordneten Rädern (6') ganzflächig, und zwar nur einmal bei einer Überfahrt. Der Boden wird also nicht doppelt überfahren.

Endseitig am Rahmen (5) befindet sich der Tragrahmen (30) für die Säschiene (31), die hier nur angedeutet dargestellt ist.

Hinter den einzelnen Walzeneinheiten (11, 13, 15) sind Bodenbearbeitungseinheiten (24) angeordnet. Die linke Bodenbearbeitungseinheit (25) wird für den Transport über die Traverse (7) nach vorne geschwenkt und die rechte Bodenbearbeitungseinheit (26) nach hinten. Die mittlere Bodenbearbeitungseinheit (27) ist direkt hinter der Hinterachse (16) bzw. der Walzeneinheit (15) angeordnet und bleibt in dieser Position. Dies ist wiederum vor allem Figur 2 zu entnehmen. Die einzelnen Bodenbearbeitungseinheiten (24, 25, 26, 27) sind vorzugsweise als Kreiseleggen (28) ausgebildet.

Figur 2 zeigt die Draufsicht auf die selbstfahrenden Bestellkombination (1) in Transportstellung. Die Traverse (7) ist aus der Querstellung in eine Längsstellung verbracht worden. In dieser Längsstellung befindet sich die Walzeneinheit (11) bzw. die vordere Zwischenachse (12) vor der Hinterachse (16) bzw. der Walzeneinheit (15) und die Walzeneinheit (13) bzw. die hintere Zwischenachse (14) hinter der Hinterachse (16) bzw. der Walzeneinheit (15). Zusammen mit der Vorderachse (6) weist die selbstfahrende Bestellkombination (1) nun vier Achsen auf. Entsprechend große Gewichte können aufgenommen werden.

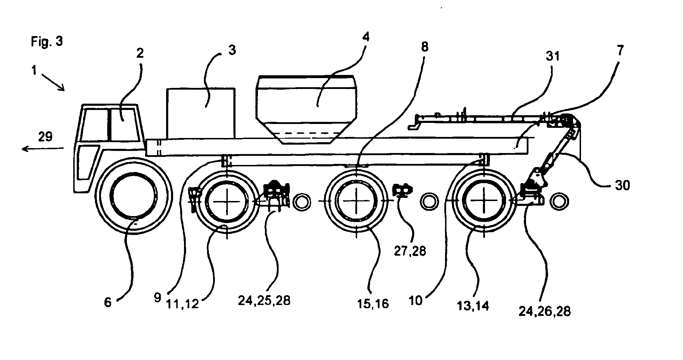

Hinter dem mittleren Bodenbearbeitungsgerät (27) ist der Tragrahmen (30) für die Säschiene (31) angeordnet. Die Säschiene (31) ist klappbar und wird für den Transport oberhalb des Rahmens (5) eingeklappt mitgeführt., was Figur 3 entnommen werden kann. Dadurch ergibt sich eine sehr kompakte Transporteinheit.

Figur 3 zeigt die Seitenansicht der selbstfahrenden Bestellkombination (1) in Transportstellung. Hier wird verdeutlicht, dass insgesamt vier Achsen (6, 12, 14, 16) für den Transport zur Verfügung stehen. Der Tragrahmen (30) für die Säschiene (31) befindet sich hier in der angehobenen Stellung mit eingeklappter Säschiene (31). Die Säschiene (31) ist oberhalb des Rahmens (5) eingeschwenkt angeordnet.

## Patentansprüche

1. Selbstfahrende Bestellkombination mit mindestens einem Saattank (4), mindestens einer Triebachse, einem Rahmen (5), der sowohl mit der Vorderachse (6) als auch einer Hinterachse (16) verbunden ist, und mit mindestens zwei Walzeneinheiten (11, 13) und einer mittleren Walzeneinheit (15), die mittelbar oder unmittelbar mit einer Bodenbearbeitungseinheit (24) verbunden sind und mit einer der Bodenbearbeitungseinheit (24) nachgeordneten Säschiene (31) mit Säscharen, wobei die Walzeneinheiten (11, 13, 15) nebeneinander angeordnet und einer Traverse (7) zugeordnet sind, die in Arbeitsstellung quer zur Fahrtrichtung (29) positioniert und mit den Walzeneinheiten (11, 13) von der Querstellung in eine Längsstellung verbringbar ausgebildet ist
**dadurch gekennzeichnet,**
**dass** die Walzeneinheiten (11, 13) ihrerseits mit der Traverse (7) schwenkbar verbunden und in der Längsstellung mit ihren Achsen zu Zwischenachsen (12, 14) werdend ausgebildet sind.

2. Selbstfahrende Bestellkombination nach Anspruch 1,
**dadurch gekennzeichnet**
**dass** den Walzeneinheiten (11, 13, 15) jeweils eine Bodenbearbeitungseinheit (24) zugeordnet ist, von denen die den Walzeneinheiten (11, 13) zugeordneten Bodenbearbeitungseinheiten (24) zusammen mit diesen verschwenkbar ausgebildet sind, während die der Walzeneinheit (15) zugeordnete Bodenbearbeitungseinheit (24) fest hinter der Hinterachse (16) angeordnet ist.

3. Selbstfahrende Bestellkombination nach einem der vorhergehenden Ansprüche,
**dadurch gekennzeichnet**
**dass** die Traverse (7) um ein in ihrer Mitte (8) ausgebildetes und sich auf der Walzeneinheit (15) abstützendes Gelenk (8') mit den zugeordneten Walzeneinheiten (11, 13) zusammen schwenkbar ist.

4. Selbstfahrende Bestellkombination nach einem der vorhergehenden Ansprüche,
**dadurch gekennzeichnet**
**dass** mindestens zwei Walzeneinheiten (11, 13), vorzugsweise alle Walzeneinheiten (11, 13, 15) angetrieben ausgebildet sind.

5. Selbstfahrende Bestellkombination nach einem der vorhergehenden Ansprüche,
**dadurch gekennzeichnet**
**dass** die Walzeneinheiten (11, 13, 15) hydrostatisch, elektrisch oder mechanisch oder die mittlere (15) mechanisch und die anderen (11, 13) hydrostatisch oder elektrisch antreibbar ausgebildet sind.

6. Selbstfahrende Bestellkombination nach einem der vorhergehenden Ansprüche,
**dadurch gekennzeichnet**
**dass** die Bodenbearbeitungseinheiten (24) als Kreiseleggeneinheiten (28) ausgebildet sind, die mechanisch oder hydrostatisch oder elektrisch antreibbar ausgeführt sind.

7. Selbstfahrende Bestellkombination nach einem der vorhergehenden Ansprüche,
**dadurch gekennzeichnet**
**dass** die Säschiene (31) hochschwenkbar ausgebildet ist.

8. Selbstfahrende Bestellkombination nach einem der vorhergehenden Ansprüche,
**dadurch gekennzeichnet**
**dass** die Säschiene (31) über den Tragrahmen (30) hochschwenkbar und einklappbar ausgebildet ist.

## Claims

1. A self-propelled seeder combination with at least one seed tank (4), at least one drive axis, a frame (5) which is connected both with the front axis (6) and a rear axis (16), and with at least two roller units (11, 13) and a middle roller unit (15), which are indirectly or directly connected with a ground treatment unit (24) and with a seed rail (31) arranged behind the ground treatment unit with seed coulters, the roller units (11, 13 ,15) being arranged next to each other and assigned to a traverse (7), which is positioned in a working position transverse to the direction of travel (29) and which is formed such that it can be brought from the transverse position into a longitudinal position with the roller units (11, 13)
**characterized in that,** the roller units (11, 13) for their part are connected with the traverse (7) in a pivotable manner and are formed such that their axes become intermediate axes (12, 14) in the longitudinal position.

2. The self-propelled seeder combination according to Claim 1,
**characterized in that,**
a ground treatment unit (24) is assigned to each of the roller units (11, 13, 15), ofwhich the ground treatment units (24) assigned to the roller units (11, 13) are designed to be pivotable with these, while the ground treatment unit (24) assigned to the roller unit (15) is arranged in a fixed position behind the rear axis (16).

3. The self-propelled seeder combination according to any one of the preceding claims,
**characterized in that,**
the traverse (7) is pivotable, together with the assigned roller units (11, 13), around a joint (8') formed in its middle (8) and supported on the roller unit (15).

4. The self-propelled seeder combination according to any one of the preceding claims,
**characterized in that,**
at least two roller units (11, 13), preferably all roller units (11, 13, 15) are driven.

5. The self-propelled seeder combination according to any one of the preceding claims,
**characterized in that,**
the roller units (11, 13, 15) are formed such that they can be driven hydrostatically, electrically or mechanically or the middle one (15) mechanically and the others (11, 13) hydrostatically or electrically.

6. The self-propelled seeder combination according to any one of the preceding claims,
**characterized in that,**
the ground treatment units (24) are executed as rotary harrow units (28) which can be driven mechanically, hydrostatically or electrically.

7. The self-propelled seeder combination according to any one of the preceding claims,
**characterized in that,**
the seed rail (31) is formed so as to swing up.

8. The self-propelled seeder combination according to any one of the preceding claims,
**characterized in that,**
the seed rail (31) is formed such that it can swing up and is retractable via the support frame (30)

## Revendications

1. Machine combinée de culture et de semis automotrice avec au moins un réservoir de semence (4), au moins un essieu moteur, un châssis (5) qui est relié aussi bien à l'essieu avant (6) qu'à un essieu arrière (16) et au moins deux unités à rouleaux (11, 13) et une unité à rouleaux centrale (15) qui sont reliées indirectement ou directement à une unité de traitement de sol (24) et avec une barre de semoir (31) à socs d'ensemencement montés en aval de l'unité de traitement de sol, étant donné que les unités à rouleaux (11, 13, 15) sont disposées l'une à côté de l'autre et sont affectées à une traverse (7) qui est positionnée en position de travail transversalement par rapport au sens de déplacement (29) et sont formées de manière à pouvoir être amenées avec les unités à rouleaux (11, 13) de la position transversale à une position longitudinale,
**caractérisée en ce que**
les unités à rouleaux (11, 13) sont pour leur part reliées de manière pivotante à la traverse (7) et sont formées de manière à se transformer en position longitudinale avec leurs essieux en essieux intermédiaires (12, 14).

2. Machine combinée de culture et de semis automotrice selon la revendication 1,
**caractérisée en ce que**
est affectée à chaque unité à rouleaux (11, 13, 15) une unité de traitement de sol (24), dont les unités de traitement de sol (24) affectées aux unités à rouleaux (11, 13) sont formées de manière à pivoter ensemble avec des dernières, tandis que l'unité de traitement de sol (24) affectée à l'unité à rouleau (15) est disposée de manière fixe derrière l'essieu arrière (16).

3. Machine combinée de culture et de semis automotrice selon l'une quelconque des revendications précédentes,
**caractérisée en ce que**
la traverse (7) est pivotante ensemble avec les unités à rouleaux (11, 13) qui y sont affectées autour d'un joint articulé (8') formé à son centre (8) et s'appuyant sur l'unité à rouleaux (15).

4. Machine combinée de culture et de semis automotrice selon l'une quelconque des revendications précédentes,
**caractérisée en ce que**
au moins deux unités à rouleaux (11, 13), de préférence toutes les unités à rouleaux (11, 13; 15) sont entraînées.

5. Machine combinée de culture et de semis automotrice selon l'une quelconque des revendications précédentes,
**caractérisée en ce que**
les unités à rouleaux (11, 13, 15) peuvent être entraînées de manière hydrostatique, électrique ou mécanique, ou l'unité centrale (15) de manière mécanique et les autres (11, 13) de manière hydrostatique ou électrique.

6. Machine combinée de culture et de semis automotrice selon l'une quelconque des revendications précédentes,
**caractérisée en ce que**
les unités de traitement de sol (24) sont formées comme herses rotatives (28) qui sont exécutées de manière à pouvoir être entraînées de manière mécanique ou hydrostatique ou électrique.

7. Machine combinée de culture et de semis automotrice selon l'une quelconque des revendications précédentes,
**caractérisée en ce que**
la barre de semoir (31) est formée de manière pouvoir pivoter haut.

8. Machine combinée de culture et de semis automotrice selon l'une quelconque des revendications précédentes,
**caractérisée en ce que**
la barre de semoir (31) est formée de manière pouvoir pivoter haut et être escamotée au-dessus du cadre porteur (30).
